# EUROPEAN PATENT APPLICATION

(11) **EP 4 715 640 A1**
(43) Date of publication of application: **25.03.2026**
(21) Application number: 25192847.9
(22) Date of filing: 30.07.2025
(51) Int. Cl.: G06F 21/32, G10L 15/02, G10L 17/24

(54) **IDENTITY AUTHENTICATION SYSTEM AND METHOD THEREOF**

(30) Priority: 23.09.2024 US 202463697601 P
(71) Applicant: National Applied Research Laboratories, Taipei City 106214 (TW)
(72) Inventor: HUANG, Chun-Ming, Hsinchu City 300091 (TW); WU, Chien-Ming, Tainan City 701401 (TW); TSAI, Tsung-Han, Hsinchu City 300091 (TW); YANG, Chih-Chyau, Hsinchu City 300091 (TW)
(74) Representative: Cabinet Chaillot

(57) **Abstract**

The present application provides an identity authentication system and method thereof, which applied for an operational processing unit executing an identity authentication program for inputting a first voice signal to a speaker identification unit and further identifying the first voice signal to generate a corresponding signal sample data. Hereby, further executing the identity authentication program for randomly generating an authentication tip message and outputting it. Thereby, a second voice signal corresponding to the authentication tip message is inputted to the speaker identification unit and compared with a signal segment of the signal sample data. While the second voice signal matches the signal segment, the second voice signal is identified for generating a semantic object data, and the semantic object data and the authentication tip message are compared to generate an identity authentication result.

## Description

### FIELD OF THE INVENTION

The present application relates to an authentication system and method thereof, and more particularly to an identity authentication system and method thereof.

### BACKGROUND OF THE INVENTION

With the advancement of technology, electronic devices are widely used in the technical fields of manufacturing, communication, transportation, medical care, business, social interaction and entertainment, such as servers providing distributed cluster computing functions, embedded devices embedded in automated equipment in many different technical fields, and personal electronic devices enabling portable video viewing and convenient access to smart digital assistants. Further, various consumer electronic devices, such as smart phones and tablet computers, have become necessities in people's lives or work. With the popularity of consumer electronic devices, the importance of device security is increasing.

Particularly, for identity authentication on an application, a password is an important role in device security, and the formal name is a key. With the increasement of security complexity, an encryption key is derived, and for handshaking between applications, a public key and a privacy key are distinguished to be applied to a public form handshaking and a private form handshaking.

However, the encryption technology for identity authentication is no longer a problem encountered by the people. The problem encountered by the people is how to set a better key for identity authentication on the application, so that identity authentication service providers derive various technologies to assist users in setting keys in the application. However, if the user forgets the key or the key is cracked, it causes many inconveniences, such as finding a way to recover the key, resetting the account or creating a new account to solve the problem of forgetting the key and the key being cracked.

Although, nowadays, there are derived through the setting of additional electronic devices to obtain a one-time key, such as: receiving a one-time key through a mobile phone, a smart phone application generating a one-time password, or a smart security lock providing a one-time password. However, if the electronic device providing the one-time password is lost or not fully protected, the one-time key cannot be used and may be cracked. Or, when the mobile phone is in a non-communication network state, the user cannot obtain the one-time key through the electronic device, and thus cannot be used for identity authentication.

Furthermore, the current operation mode for identity authentication is that the user uses gesture operation or finger control touch panel or key operation to complete identity authentication, so that the identity authentication is very unfriendly to blind people or people who cannot watch the screen.

In view of the above problems of the prior art, the present application provides an identity authentication system and method, which may improve the situation of forgetting the key and the one-time key may not be used.

### SUMMARY

The present application provides an identity authentication system and method, which establishes signal sampling data by the first voice signal of the user, inputs the second voice signal according to the authentication prompt message, performs speaker recognition and semantic recognition, and obtains the identity authentication result, thereby improving the security and not requiring the setting of specific devices for identity authentication.

In order to overcoming aforementioned problem and achieving aforementioned objective, the present application provides an identity authentication method, which is applied to an operation processor inputting a first voice signal into the operation processor through a voice input element, the operation processor executing a speaker recognition model to sample and recognize the first voice signal to correspondingly generate a signal sampling data, the signal sampling data comprising at least one first signal segment, the identity authentication method first using the operation processor to randomly generate an authentication prompt message to an output element to drive the output element to output the authentication prompt message, wherein the authentication prompt message comprises at least one prompt object and an object prompt message, the object prompt message corresponding to the at least one prompt object; then, inputting a second voice signal into the operation processor through the voice input element according to the authentication prompt message to drive the operation processor to execute the speaker recognition model to sample at least one second signal segment from the second voice signal and recognize the at least one second signal segment according to the at least one first signal segment of the signal sampling data generated previously to recognize the speaker of the second voice signal, the operation processor first signal segment driving the operation processor to execute a semantic recognition model to recognize the second voice signal and generate a semantic object data, and driving the operation processor to compare the object prompt message according to the semantic object data to generate an identity authentication result. Thus, the person to be authenticated completes the correct challenge, and the user may complete the identity authentication quickly without binding any electronic device.

The present application provides an embodiment, wherein the registration prompt message and the authentication prompt message are images or sounds.

In an embodiment of the present application, wherein in the step of driving the operation processor to execute the speaker recognition model to sample at least one second signal segment from the second voice signal and recognize the at least one second signal segment according to the at least one first signal segment of the signal sampling data generated previously to recognize the speaker of the second voice signal, and execute a semantic recognition model to recognize the second voice signal and generate a semantic object data, the at least one second signal segment corresponds to at least one second speaker characteristic parameter, the semantic recognition unit executes the semantic recognition model to perform a feature extraction to extract a characteristic value of the second voice signal, and combines a speaker characteristic parameter of the second voice signal and a feature extraction result with the at least one second speaker characteristic parameter to convert into the semantic object data.

In an embodiment of the present application, the operation processor executes the speaker recognition model to convert the first voice signal into a plurality of word vectors, encodes an order of the word vectors, and extracts features of the word vectors to obtain a plurality of feature vectors, and normalizes the feature vectors to generate the signal sample data.

In an embodiment of the present application, in the step of driving the operation processor to execute the speaker recognition model to sample at least one second signal segment from the second voice signal and recognize the at least one second signal segment according to the at least one first signal segment of the signal sampling data generated previously to recognize the speaker of the second voice signal, and execute a semantic recognition model to recognize the second voice signal and generate a semantic object data, the operation processor first samples the at least one second signal segment according to the second voice signal, and then compares the at least one second signal segment with the at least one first signal segment to recognize the second voice signal. When the at least one second signal segment matches the at least one first signal segment, the operation processor determines that the speaker of the first voice signal and the speaker of the second voice signal are the same person, and then executes the semantic recognition model to recognize the second voice signal and generate the semantic object data.

In an embodiment of the present application, in the step of driving the operation processor to execute the speaker recognition model to sample at least one second signal segment from the second voice signal and recognize the at least one second signal segment according to the at least one first signal segment of the signal sampling data generated previously to recognize the speaker of the second voice signal, and execute a semantic recognition model to recognize the second voice signal and generate a semantic object data, the operation processor executes the speaker recognition model to convert the second voice signal into a plurality of word vectors, encodes an order of the word vectors, and extracts features of the word vectors to obtain a plurality of second feature vectors, and normalizes the second feature vectors to generate the at least one second signal segment.

In an embodiment of the present application, the speaker recognition model is a WavLM model, a SpeakerNet model, or a TitaNet model, and the semantic recognition model is a Transformer model, a Wav2Vec 2.0 model, or a LAS model.

The application further provides an identity authentication system, which comprises an operation processor and an output element. The operation processor is coupled with a voice input element and randomly generates an authentication prompt message. The operation processor receives a first voice signal through the voice input element and executes a speaker recognition model to sample and recognize the first voice signal to generate a signal sample data. The signal sample data comprises at least one first signal segment. The output element is coupled with the operation processor. The output element outputs the authentication prompt message in an authentication stage. The authentication prompt message comprises at least one prompt object and an object prompt message. The object prompt message corresponds to the at least one prompt object. The operation processor receives a second voice signal through the voice input element. The operation processor executes the speaker recognition model to sample at least one second signal segment from the second voice signal and recognize the at least one second signal segment according to the at least one first signal segment to recognize whether the speaker of the second voice signal and the speaker of the first voice signal are the same person. The operation processor executes a semantic recognition model to recognize the second voice signal and generate a semantic object data. The semantic object data comprises a plurality of semantic objects. The operation processor compares the object prompt message according to the semantic object data to generate an identity authentication result. Thus, the person to be authenticated may complete the correct challenge without binding any electronic device to quickly complete the identity authentication.

In another embodiment of the present application, wherein the registration prompt message and the authentication prompt message of the identity authentication system are image messages or voice messages.

In another embodiment of the present application, wherein the operation processor executes the speaker recognition model to convert the first voice signal into a plurality of word vectors, encode the order of the word vectors, and extract features of the word vectors to obtain a plurality of feature vectors. The operation processor executes a normalization operation on the feature vectors to generate the signal sample data.

In another embodiment of the present application, wherein the operation processor compares the at least one first signal segment with the at least one second signal segment to recognize the second voice signal, and executes the semantic recognition model to recognize the second voice signal and generate the semantic object data when the at least one second signal segment matches the at least one first signal segment.

In another embodiment of the present application, wherein the operation processor executes the speaker recognition model to convert the second voice signal into a plurality of word vectors, encodes the order of the word vectors, and extracts features of the word vectors to obtain a plurality of second feature vectors, and executes a normalization operation on the second feature vectors to generate the at least one second signal segment.

In another embodiment of the present application, wherein the at least one second signal segment corresponds to at least one second speaker feature parameter, the operation processor executes the semantic recognition model to extract features of the second voice signal, and combines a feature extraction result of the second voice signal with the at least one second speaker feature parameter to convert into the semantic object data.

In another embodiment of the present application, wherein the speaker recognition model of the identity authentication system is a WavLM model, a SpeakerNet model, or a TitaNet model, and the semantic recognition model of the identity authentication system is a Transformer model, a Wav2Vec 2.0 model, or a LAS model.

### BRIEF DESCRIPTION OF THE DRAWINGS

FIG. 1A is a flow diagram of obtaining signal sampling data according to an embodiment of the application;
FIG. 1B is a flow diagram of identity authentication according to an embodiment of the application;
FIG. 2A is a schematic diagram of obtaining signal sampling data according to an embodiment of the application;
FIG. 2B is a schematic diagram of randomly generating an authentication prompt message according to an embodiment of the application;
FIG. 2C is a schematic diagram of inputting a voice signal according to an embodiment of the application;
FIG. 2D is a schematic diagram of recognizing a voice signal according to an embodiment of the application;
FIG. 2E is a schematic diagram of obtaining semantic object data according to an embodiment of the application;
FIG. 2F is a schematic diagram of obtaining and outputting an identity authentication result according to an embodiment of the present application;
FIG. 3 is a schematic diagram of a registration prompt message according to an embodiment of the present application;
FIG. 4A is a schematic diagram of an authentication prompt message according to an embodiment of the present application;
FIG. 4B is a schematic diagram of an authentication prompt message according to an embodiment of the present application;
FIG. 4C is a schematic diagram of an authentication prompt message according to an embodiment of the present application;
FIG. 5 is a flow chart of an identity authentication process according to another embodiment of the present application;
FIG. 6A is a schematic diagram of obtaining signal sample data according to another embodiment of the present application;
FIG. 6B is a schematic diagram of randomly generating an authentication prompt message according to another embodiment of the present application;
FIG. 6C is a schematic diagram of inputting a voice signal according to another embodiment of the present application;
FIG. 6D is a schematic diagram of recognizing a voice signal according to another embodiment of the present application;
FIG. 6E is a schematic diagram of obtaining semantic object data according to another embodiment of the present application;
FIG. 6F is a schematic diagram of obtaining and outputting an identity authentication result according to another embodiment of the present application;
FIG. 7A is a schematic diagram of obtaining signal sample data according to another embodiment of the present application;
FIG. 7B is a schematic diagram another randomly generating an authentication prompt message according to another embodiment of the present application;
FIG. 7C is a schematic diagram of inputting a voice signal according to another embodiment of the present application;
FIG. 7D is a schematic diagram of recognizing a voice signal according to another embodiment of the present application;
FIG. 7E is a schematic diagram of obtaining semantic object data according to another embodiment of the present application;
FIG. 7F is a schematic diagram of obtaining and outputting an identity authentication result according to another embodiment of the present application;
FIG. 8A is a schematic diagram of obtaining signal sample data according to another embodiment of the present application;
FIG. 8B is a schematic diagram of randomly generating an authentication prompt message according to another embodiment of the present application;
FIG. 8C is a schematic diagram of inputting a voice signal according to another embodiment of the present application;
FIG. 8D is a schematic diagram of recognizing a voice signal according to another embodiment of the present application;
FIG. 8E is a schematic diagram of obtaining semantic object data according to another embodiment of the present application; and
FIG. 8F is a schematic diagram of obtaining and outputting the identity authentication result according to another embodiment of the present application.

### Detailed Description

To provide the reviewers with a further understanding and recognition of the features and effects achieved by the present application, detailed explanations and examples are provided as follows:
Nowadays, the existing identity authentication technology is often limited by the problems of forgotten key, cracked key, or the need to bind a specific device to obtain a one-time password. The present application provides an identity authentication system and a method thereof. After the corresponding first voice signal input by the voice input element is recognized, which is used to be a signal sampling data for inputting the second voice signal on performing the identity authentication according to the authentication prompt message. When the second voice signal matches at least one first signal segment of the signal sampling data, semantic recognition is performed to obtain a semantic object data, and comparing the semantic object data with the authentication prompt message to obtain the identity authentication result. Thus, the person to be authenticated completes the correct challenge, thereby completing the identity authentication, and solving the problems of forgotten key, cracked key, or the need to bind a specific device to obtain a one-time password.

The identity authentication system and method are described in detail as follows.

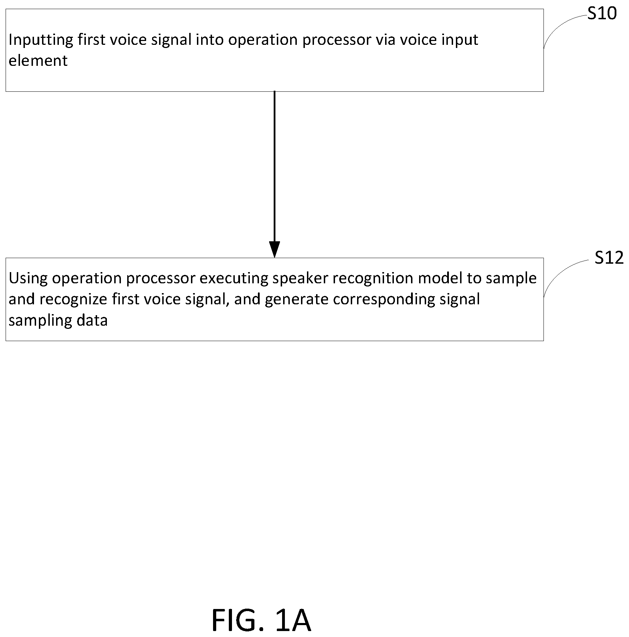

Referring to FIG. 1A, which is a flowchart of obtaining signal sampling data according to an embodiment of the present application. In this embodiment, the identity authentication method of the present application first obtains signal sampling data for speaker recognition, and the steps include the following:
Step S10: Inputting first voice signal into operation processor via voice input element; and
Step S12: Using operation processor executing speaker recognition model to sample and recognize first voice signal, and generate corresponding signal sampling data.

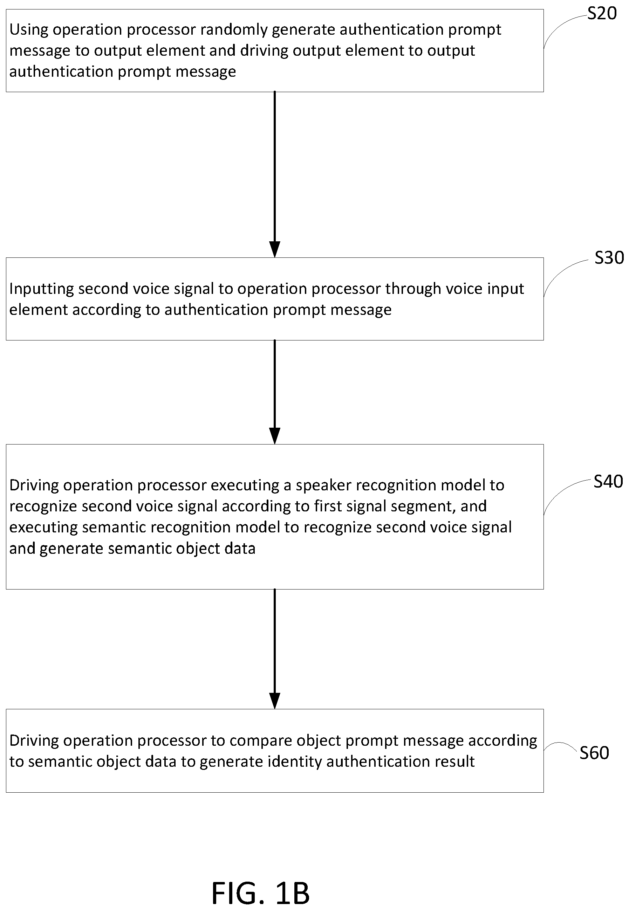

In addition, referring to FIG. 1B, which is a flowchart illustrating identity authentication according to an embodiment of the present application. In this embodiment, the identity authentication method of the present application, which is based on the signal sampling data obtained by step S12, performs the following steps:
Step S20: Using operation processor randomly generate authentication prompt message to output element and driving output element to output authentication prompt message;
Step S30: Inputting second voice signal to operation processor through voice input element according to authentication prompt message;
Step S40: Driving operation processor executing a speaker recognition model to recognize second voice signal according to first signal segment, and executing semantic recognition model to recognize second voice signal and generate semantic object data; and
Step S60: Driving operation processor to compare object prompt message according to semantic object data to generate identity authentication result.

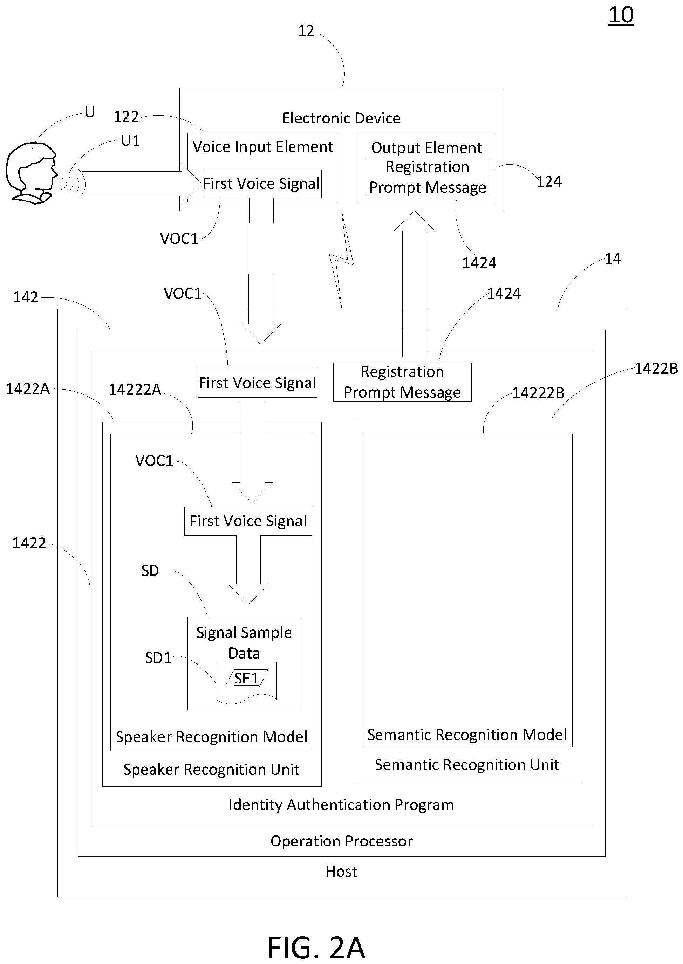

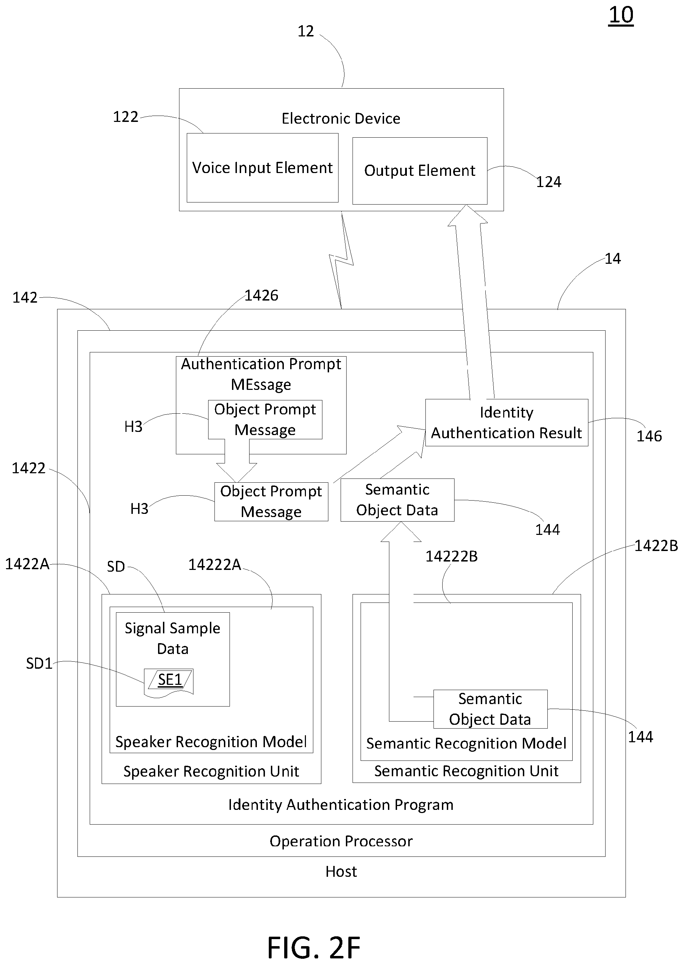

Please further refer to FIG. 2A to FIG. 2F, which are schematic diagrams of obtaining signal sampling data, randomly generating an authentication prompt message, inputting a voice signal, comparing a first signal segment and the voice signal, and obtaining semantic object data and an identity authentication result of an embodiment of the present application. As shown in the figures, the identity authentication method of the present application is applied to an identity authentication system 10, which comprises an electronic device 12 and a host 14. In this embodiment, an operation processor 142 is disposed in the host 14. The electronic device 12 is communicatively connected to the host 14. The electronic device 12 includes a voice input element 122 and an output element 124. For example, the electronic device 12 is connected to the host 14 through a wireless network, and the electronic device 12 is a smart phone as well as the host 14 is a remote server. The electronic device 12 and the host 14 may transmit data through a transmission protocol, such as Hyper Text Transfer Protocol (HTTP), Transmission Control Protocol (TCP), or the other like Protocol. The operation processor 142 executes an identity authentication program 1422, which comprises a speaker recognition unit 1422A executing a speaker recognition model 14222A and a semantic recognition unit 1422B executing a semantic recognition model 14222B.

In step S10, as shown in FIG. 2A, the voice input element 122 inputs a first voice signal VOC1 based on a first voice U1 from the user U to the electronic device 12, and the electronic device 12 transmits the first voice signal VOC1 to the host 14, that is, the first voice signal VOC1 is input to the operation processor 142 via the voice input element 122 equivalently. In step S12, the operation processor 142 executes the speaker recognition model 14222A to sample and recognize the first voice signal VOC1 to correspondingly generate a signal sampling data SD, that is, at least one first signal segment SD1 corresponding to at least one first speaker embedding parameter SE1 is cut and extracted from the first voice signal VOC1 after recognition, and stored into the signal sampling data SD. In this embodiment, the operation processor 142 executes the speaker recognition model 14222A to convert the first voice signal VOC1 into a plurality of word vectors, encode the order of the word vectors, and extract features of the word vectors to obtain a plurality of feature vectors, and normalize the feature vectors to generate the signal sampling data SD. Since the speaker recognition model 14222A itself is a prior art, for example, the speaker recognition model is a WavLM model, a SpeakerNet model, or a TitaNet model, the speaker recognition model 14222A is not described more in detailed herein.

In this way, the host 14 establishes the signal sampling data SD corresponding to the user of the electronic device 12, and may store the signal sampling data SD in a built-in storage medium, such as a traditional hard disk, a solid-state hard disk, or a memory, or store the signal sampling data SD in an external physical database or a cloud database, such as a NAS system or a Google cloud hard disk.

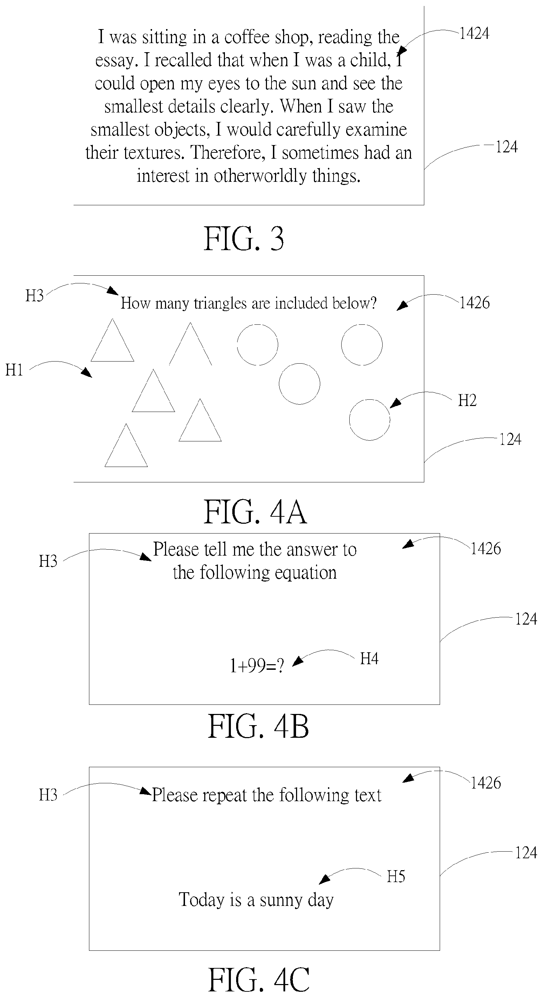

In addition, as shown in FIG. 3, the identity authentication program 1422 of the present application may further generate a registration prompt message 1424 to the electronic device 12 to drive the electronic device 12 to output the registration prompt message 1424 as an image message or a voice message via the output element 124. In this embodiment, the registration prompt message 1424 is taken as an example to be presented as the image message via the output element 124, so the output element 124 in this embodiment is a display element, such as a liquid crystal display (LCD). The registration prompt message 1424 in this embodiment includes a plurality of registration prompt texts (for example, a short story in the Ming Dynasty) to facilitate the user to input the corresponding first voice signal VOC1 according to the registration prompt message 1424, so that the speaker recognition model 14222A executed by the operation processor 142 performs recognition and sampling on the first voice signal VOC1 to generate the signal sampling data SD. In addition, the registration prompt message 1424 may further include at least one prompt object, so that the output element 124 may present the voice message in addition to the image message. For Example, the user U inputs the first voice signal VOC1 for at least 5 seconds through the registration prompt message 1424, so that the signal sampling data SD is obtained more effectively.

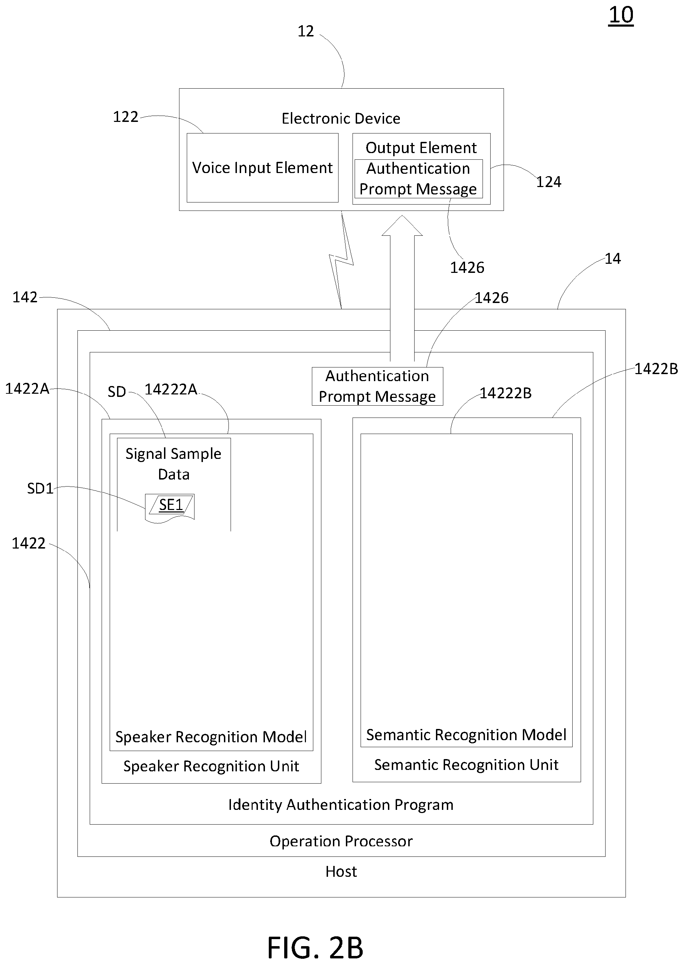

Referring to FIG. 1A again, in step S20, as shown in FIG. 2B, the host 14 randomly generates an authentication prompt message 1426 by the identity authentication program 1422 executed by the operation processor 142, and further as shown in FIG. 4A, the authentication prompt message 1426 displayed by the output element 124 includes a plurality of first prompt objects H1, a plurality of second prompt objects H2, and an object prompt message H3, wherein the object prompt message H3 corresponds to the first prompt objects H1 or the second prompt objects H2, in particular, the shape and the number of the first prompt objects H1 or the second prompt objects H2, for example, the first prompt objects H1 are five triangles, and the second prompt objects H2 are four circles. In addition, as shown in FIG. 4B, the authentication prompt message 1426 displayed by the output element 124 may be a calculation prompt message, that is, including a calculation object H4 and the object prompt message H3, for example, 1+99=? as the calculation object, and the object prompt message H3 is please say the answer of the following calculation, and further as shown in FIG. 4C, the application may use the registration prompt message 1424 as the authentication prompt message 1426, that is, the authentication prompt message 1426 displayed by the output element 124 includes a text object H5 and the object prompt message H3, for example, the object prompt message H3 is please read the following text, and the text object H5 is today is sunny.

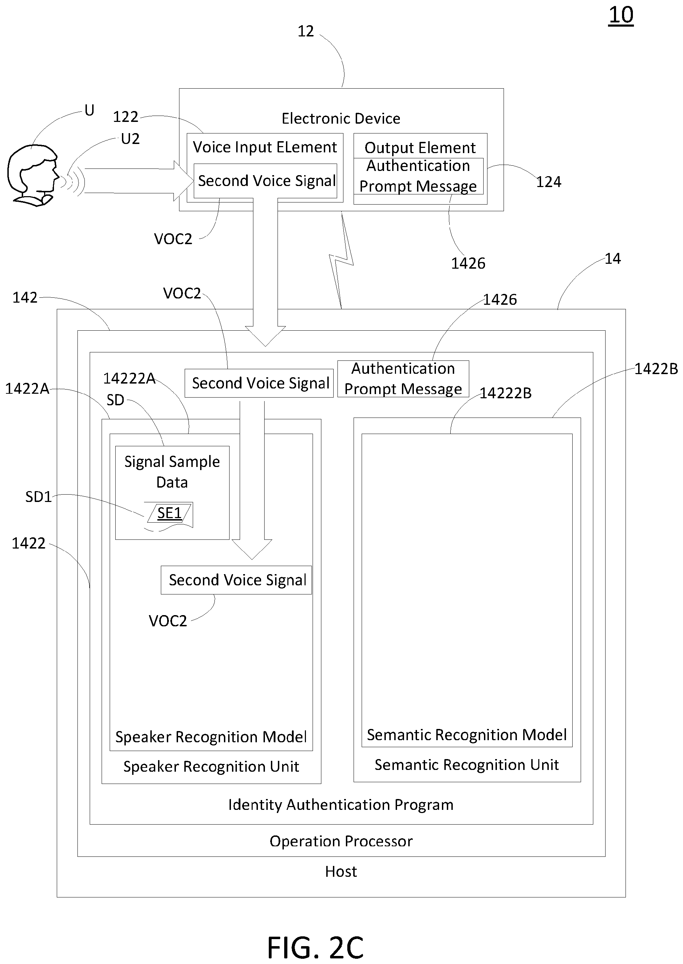

In step S30, as shown in FIG. 2C, the user U of the electronic device 12 utters a second voice U2, and the voice input element 122 inputs a second voice signal VOC2 based on the second voice U2 to the electronic device 12 while the second voice U2 is based on the authentication prompt message 1426 presented in step S20, and the electronic device 12 transmits the second voice signal VOC2 to the host 14, that is, the operation processor 142 receives the second voice signal VOC2 through the voice input element 122, and then the speaker recognition model 14222A in the identity authentication program 1422 is executed for judgment.

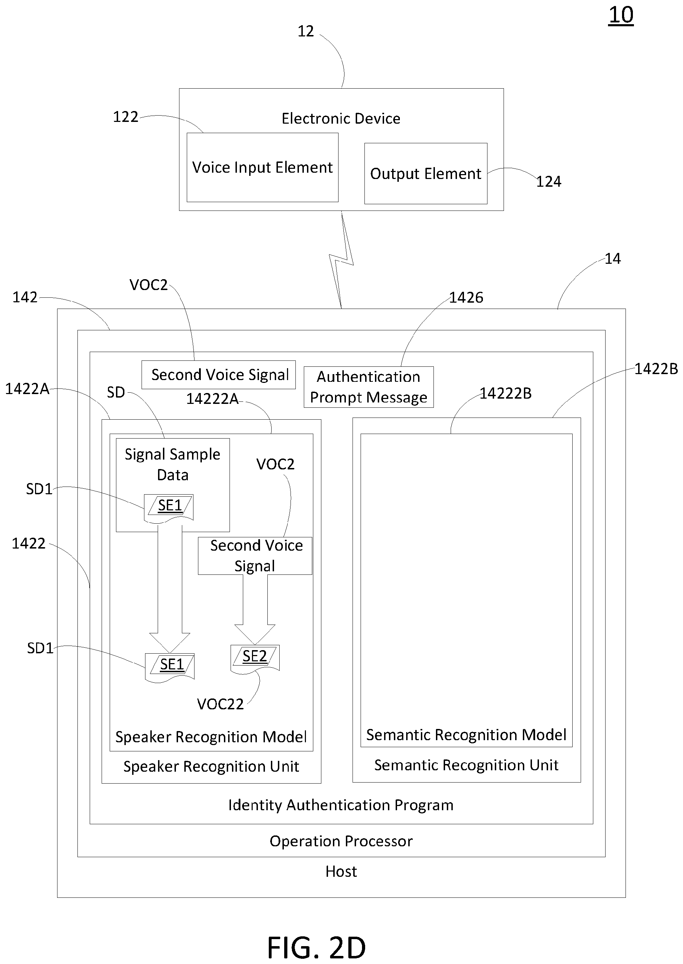

In step S40, as shown in FIG. 2D, the speaker recognition model 14222A of the identity authentication program 1422 executed by the operation processor 142 reads the previously stored signal sampling data SD and samples at least one second signal segment VOC21 from the second voice signal VOC2 to determine whether the at least one second signal segment VOC21 of the second voice signal VOC2 matches the at least one first signal segment SD1 according to the signal sampling data SD through the speaker recognition model 14222A, so as to recognize the second voice signal VOC2.

In this case, the operation processor 142 executes the speaker recognition model 14222A to convert the second voice signal VOC2 into a plurality of word vectors, encode the order of the word vectors, and extract features of the word vectors to obtain a plurality of second feature vectors, and perform a normalization operation on the second feature vectors to generate the at least one second signal segment VOC21. This operation is an example of the existing speaker recognition technology, and thus is not described more in detailed herein. The at least one second signal segment VOC21 corresponds to at least one second speaker feature parameter.

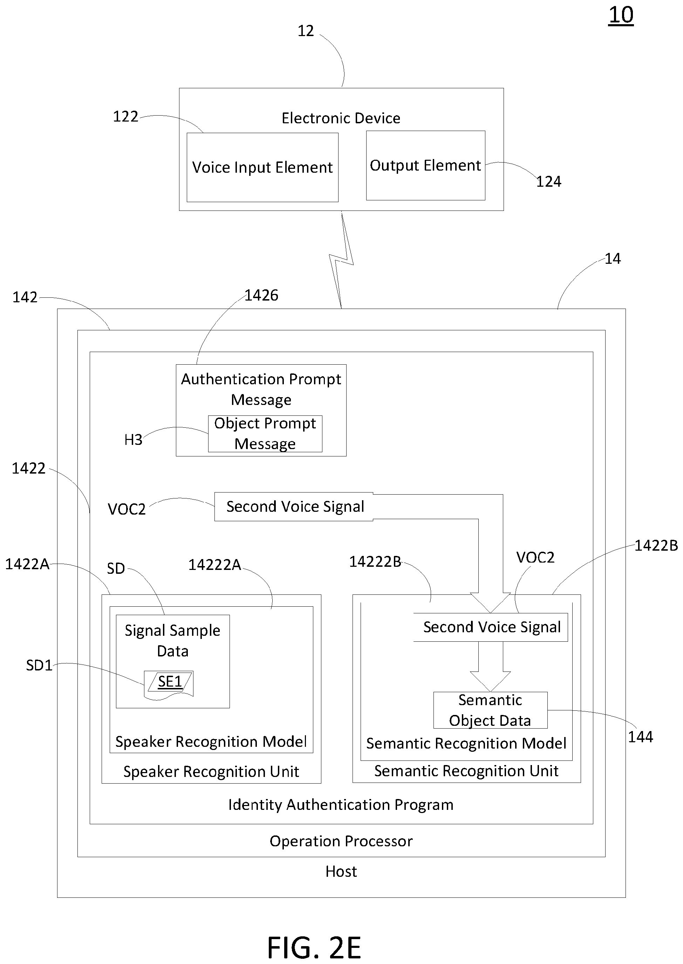

Meanwhile, in step S40, as shown in FIG. 2E, the operation processor 142 executes the semantic recognition model 14222B of the semantic recognition unit 1422B to recognize the second voice signal VOC2 and correspondingly generate a semantic object data 144. In this embodiment, the operation processor 142 executes the semantic recognition model 14222B to extract features of the second voice signal VOC2, and combines the at least one second speaker feature parameter SE2 of the second voice signal VOC2 and a feature extraction result FE to convert the second voice signal VOC2 into the semantic object data 144. For example, the semantic recognition model is a Transformer model, a Wav2Vec 2.0 model, or a LAS model, which are all mature technologies that first extract features and then combine the feature extraction result and the speaker features to convert the feature extraction result into semantic data. Therefore, the semantic recognition model 14222B is not described more in detailed herein.

In step S60, as shown in FIG. 2E, the operation processor 142 compares the object prompt message H3 with the semantic object data 144 to generate an identity authentication result 146. That is, when the operation processor 142 determines that the semantic object data 144 matches the object prompt message H3, the identity authentication result 146 indicates that the authentication is passed. When the operation processor 142 determines that the semantic object data 144 does not match the object prompt message H3, the identity authentication result 146 indicates that the authentication is failed. Thus, the present application may authenticate the person to complete the correct challenge, thereby completing the identity authentication, and solving the problems of forgetting the key, the key being cracked, or the one-time password being obtained by binding a specific device.

The above embodiment is that the operation processor 142 executes the speaker recognition model 14222A and the semantic recognition model 14222B in the same step. In addition, the speaker recognition model 14222A and the semantic recognition model 14222B may be executed separately, and the details are as follows.

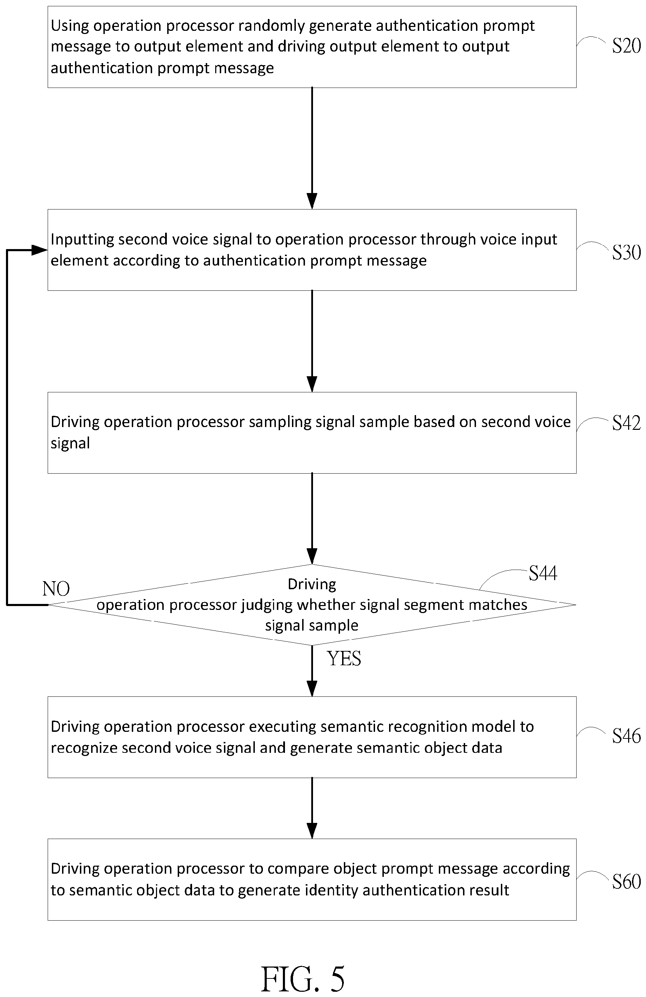

Referring to FIG. 5, which is a flow chart of an identity authentication method according to another embodiment of the present application. As shown in the figure, the identity authentication method of the present application may execute the speaker recognition model 14222A and the semantic recognition model 14222B separately in the authentication stage. The steps of obtaining the signal sampling data SD in this embodiment are the same as the steps S10 to S12 in the previous embodiment, and thus this embodiment does not increase the figures and the description. The steps S20 to S30 and S60 in the present embodiment are the same as the steps S20 to S30 and S60 in the previous embodiment, and thus are not described more in detailed herein.

In step S42, as shown in FIG. 2D, the operation processor 142 executes the speaker recognition model 14222A of the identity authentication program 1422 to read the signal sampling data SD previously stored and sample at least one second signal segment VOC21 from the second voice signal VOC2. In step S44, the operation processor 142 determines whether the at least one second signal segment VOC21 of the second voice signal VOC2 matches the at least one first signal segment SD1 according to the signal sampling data SD through the speaker recognition model 14222A. When the two match, step S46 is executed, and the second voice signal VOC2 is read to the semantic recognition unit 1422B. When the two do not match, step S30 is re-executed, so that the electronic device 12 transmits another second voice signal VOC2 to the host 14, and the at least one second signal segment VOC21 is resampled in step S42 and determined in step S44 to determine whether step S30 or step S46 is executed.

In step S46, as shown in FIG. 2E, the operation processor 142 executes the semantic recognition model 14222B of the semantic recognition unit 1422B to recognize the second voice signal VOC2 and correspondingly generate a semantic object data 144. The operation processor 142 executes the semantic recognition model 14222B to feature extract the second voice signal VOC2, and combines a feature extraction result of the second voice signal VOC2 and at least one second speaker characteristic parameter SE2 corresponding to the at least one second signal segment VOC21 to convert into the semantic object data 144.

The above implementation is an example in which the identity authentication program 1422 is executed in the operation processor 142 of the host 14. However, the present application may further disclose another identity authentication system 20, which includes an electronic device 22 directly executing the identity authentication program 1422, as described below.

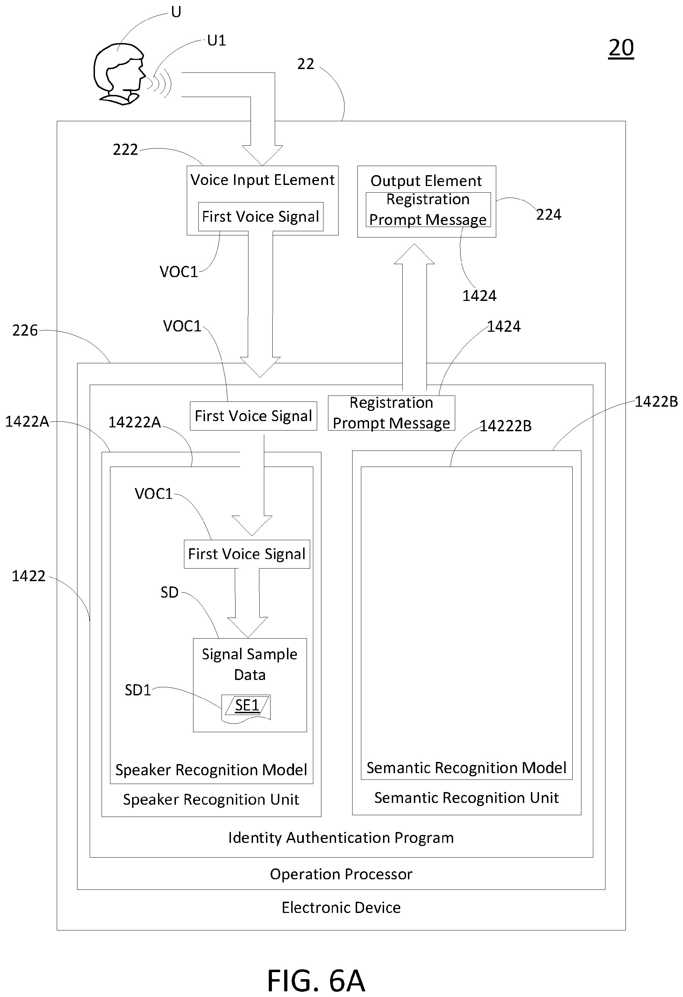

Please further refer to FIG. 6A to FIG. 6F, which are schematic diagrams of obtaining signal sampling data, randomly generating an authentication prompt message, inputting a voice signal, comparing a first signal segment with the voice signal, and obtaining semantic object data and an identity authentication result according to another embodiment of the present application. In this embodiment, the identity authentication system 20 of the present application comprises the electronic device 22, which comprises a voice input element 222, an output element 224, and an operation processor 226 executing the identity authentication program 1422. Therefore, the difference between this embodiment and the previous embodiment is that this embodiment directly executes all steps described in the previous embodiment in the electronic device 22.

Please further refer to FIG. 1A, in step S10, as shown in FIG. 6A, the voice input element 222 inputs the first voice signal VOC1 to the electronic device 22, and the electronic device 22 inputs the first voice signal VOC1 to the operation processor 226. Therefore, in step S12, the operation processor 226 executes the speaker recognition model 14222A to sample and recognize the first voice signal VOC1, so as to correspondingly generate the signal sampling data SD, that is, at least one first signal segment SD1 corresponding to the at least one first speaker characteristic parameter SE1 is extracted from the first voice signal VOC1 and stored as the signal sampling data SD.

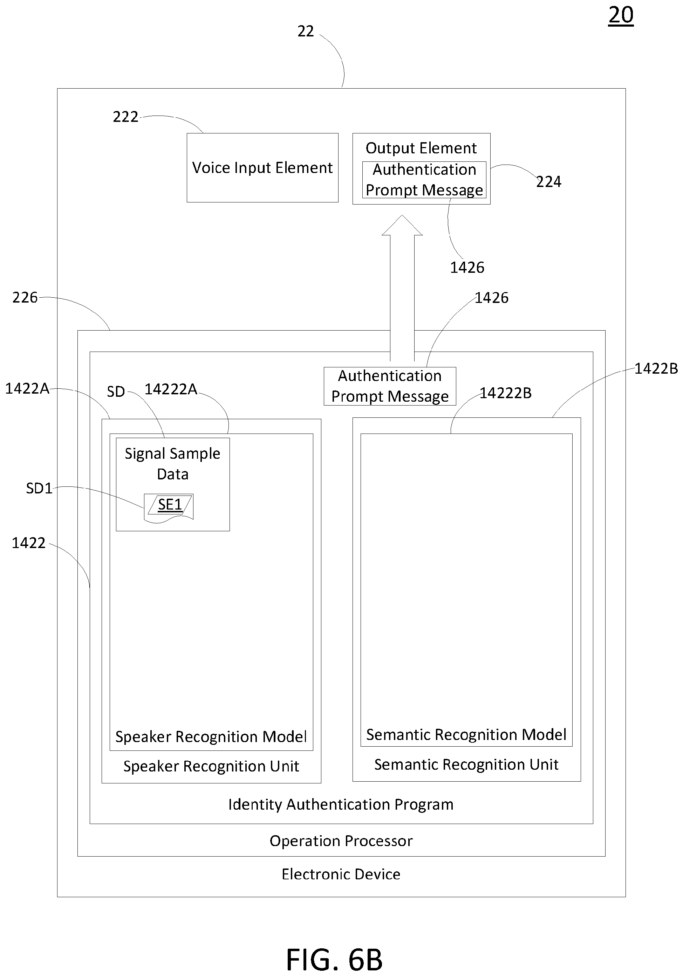

In step S20, as shown in FIG. 6B, the electronic device 22 randomly generates an authentication prompt message 1426 through the identity authentication program 1422 executed by the operation processor 226.

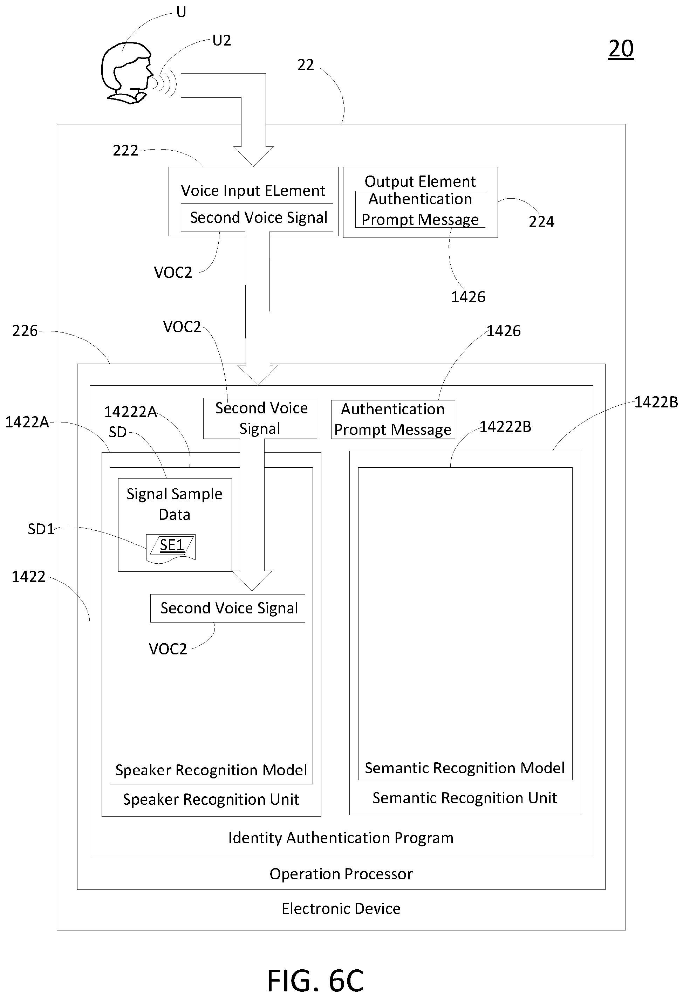

In step S30, as shown in FIG. 6C, the electronic device 22 receives a second voice signal VOC2 through the voice input element 122 and transmits the second voice signal VOC2 to the host 14, that is, the operation processor 226 receives the second voice signal VOC2 through the voice input element 222 and then the speaker recognition model 14222A in the identity authentication program 1422 performs judgment.

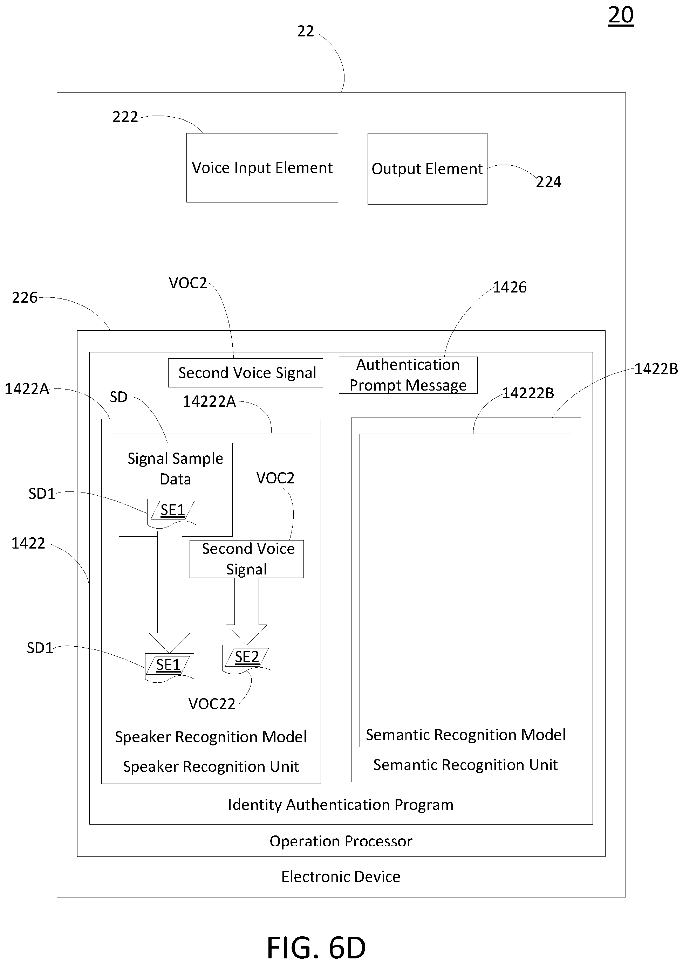

In step S42, as shown in FIG. 6D, the operation processor 226 executes the speaker recognition model 14222A of the identity authentication program 1422 to read the previously stored signal sampling data SD and sample at least one second signal segment VOC21 from the second voice signal VOC2 to determine whether the first signal segment SD1 matches the second signal segment VOC21 of the second voice signal VOC2 based on the signal sampling data SD. When it is determined that the two match, step S50 is executed subsequently. When it is determined that the two do not match, step S30 is re-executed subsequently to transmit another second voice signal VOC2 to the electronic device 22, and steps S42 and S44 are executed subsequently to determine whether the speaker of the other second voice signal VOC2 is the same as the speaker of the first voice signal VOC1.

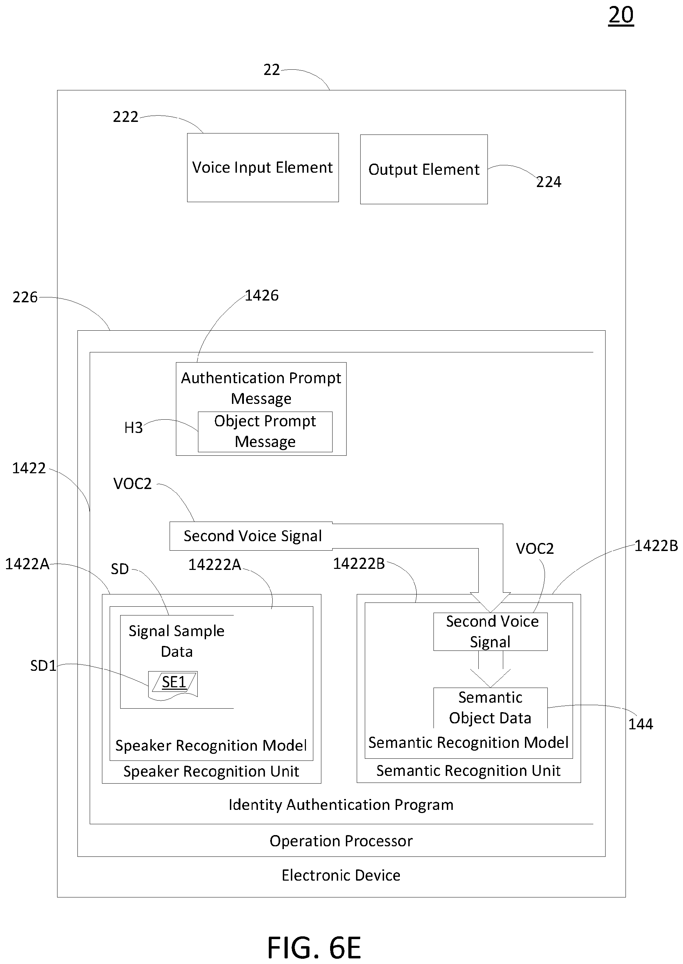

In step S46, as shown in FIG. 6E, the operation processor 226 executes the semantic recognition model 14222B to recognize the second voice signal VOC2 and correspondingly generate a semantic object data 144. The operation processor 226 executes the semantic recognition model 14222B to feature extract the second voice signal VOC2, and combines the feature extraction result of the second voice signal VOC2 with the second speaker characteristic parameter SE2 to convert into the semantic object data 144. For example, the semantic recognition model is a Transformer model, a Wav2Vec 2.0 model, or a LAS model, and thus the semantic recognition model 14222B is not described more in detailed herein.

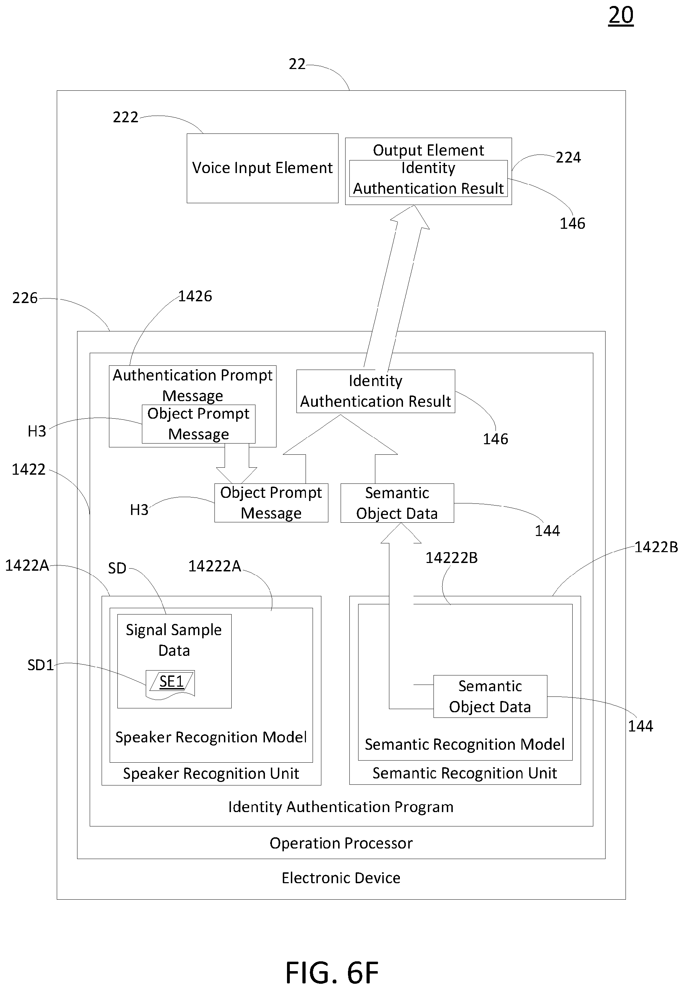

In step S60, as shown in FIG. 6F, the operation processor 226 compares the object prompt message H3 with the semantic object data 144 to generate the identity authentication result 146. That is, when the operation processor 226 determines that the semantic object data 144 matches the object prompt message H3, the identity authentication result 146 indicates that the authentication is passed. When the operation processor 226 determines that the semantic object data 144 does not match the object prompt message H3, the identity authentication result 146 indicates that the authentication is failed. The present application thus completes the correct challenge of the authenticated person to complete the identity authentication, and solves the problems of forgotten key, cracked key, and the need to bind a specific device to obtain a one-time password.

From the above embodiments, the identity authentication system and method of the present application have the advantage of one-time password being difficult to crack, and the user does not need to prepare additional devices or software during authentication. In addition, the authentication prompt message 1426 may include non-personal data and non-numeric arrangement.

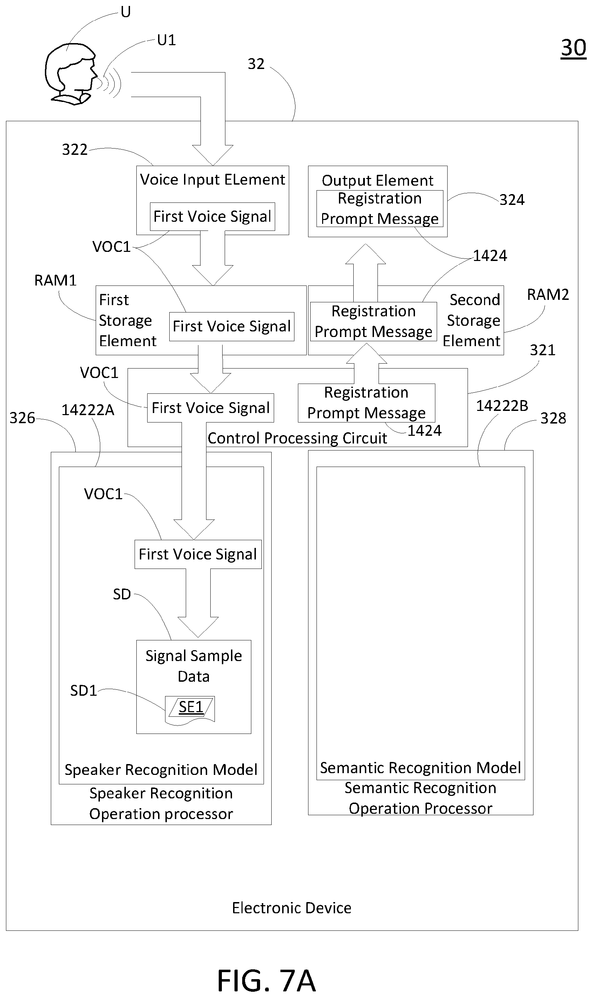

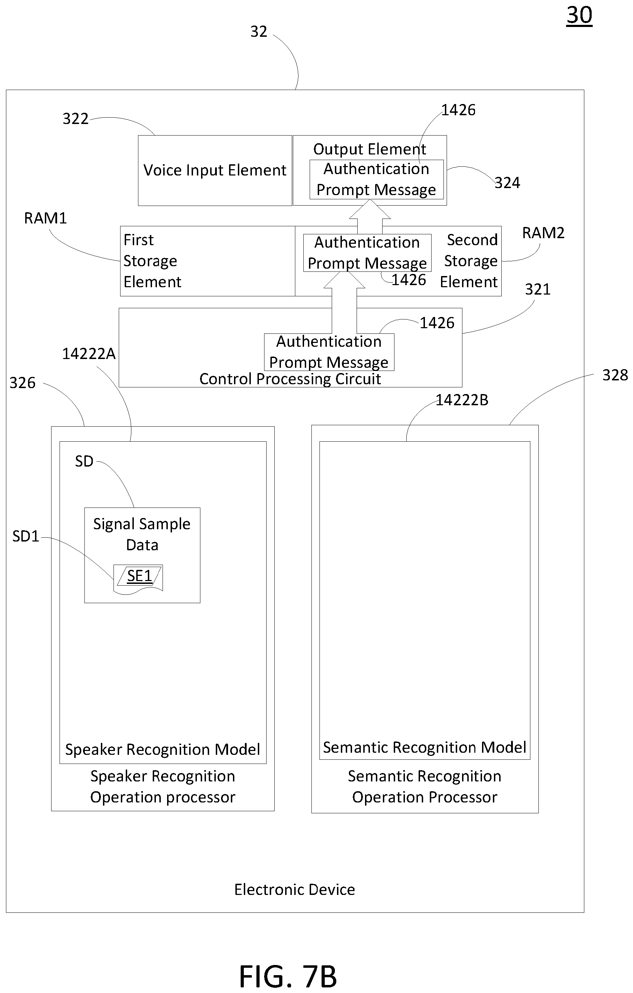

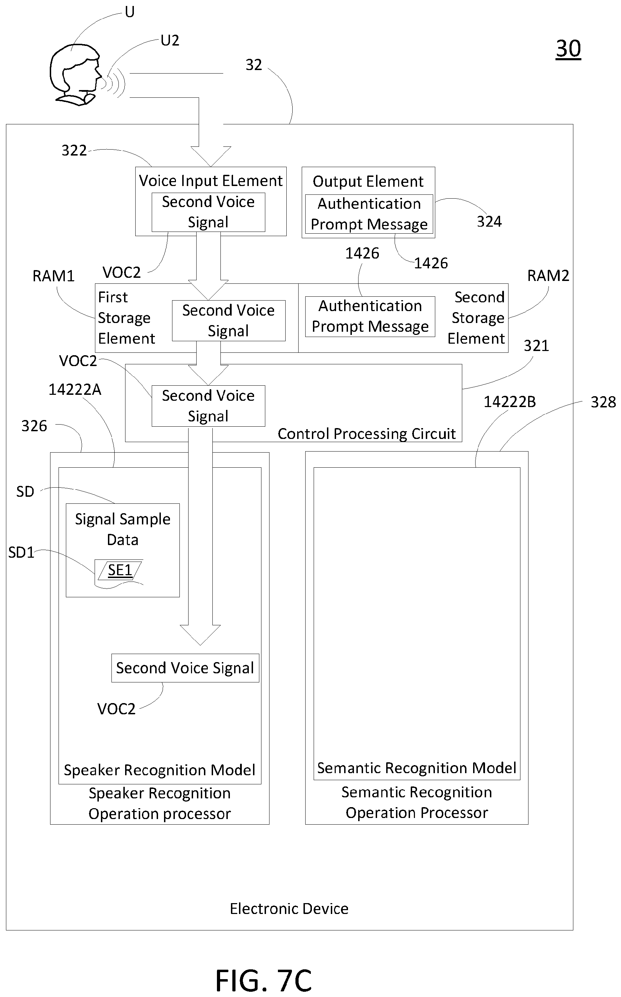

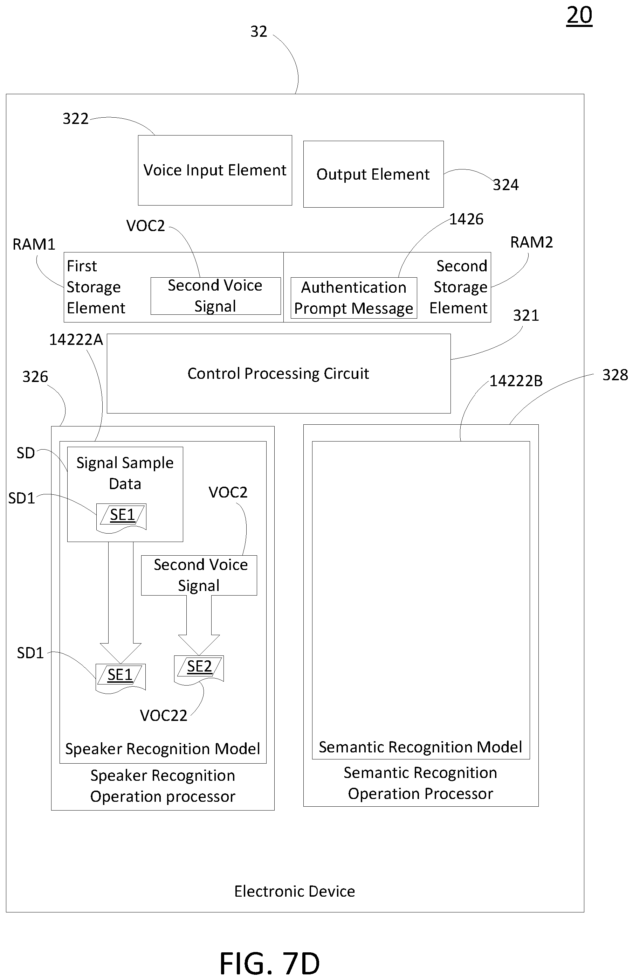

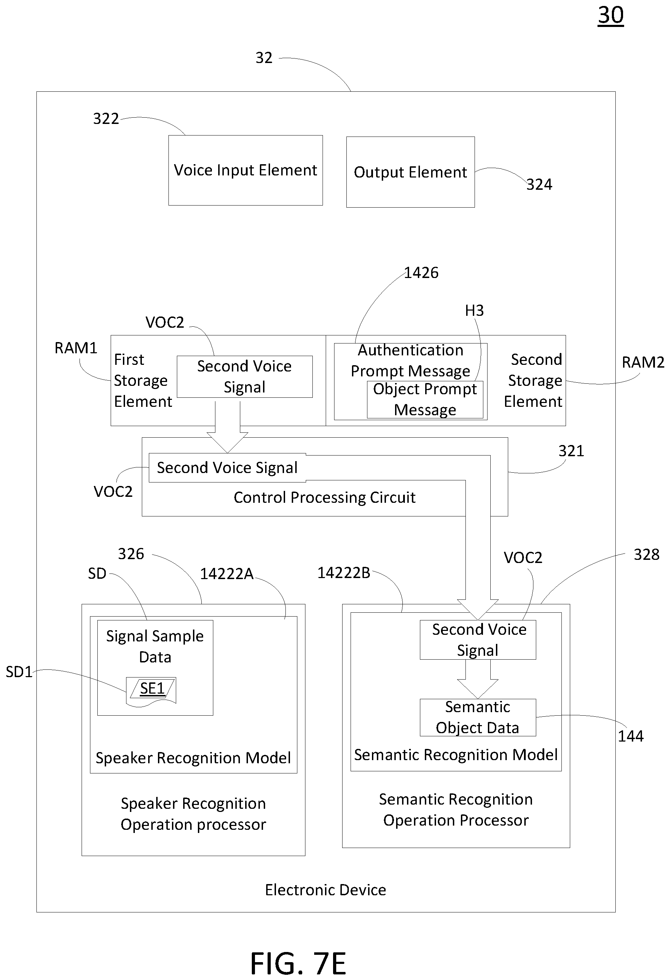

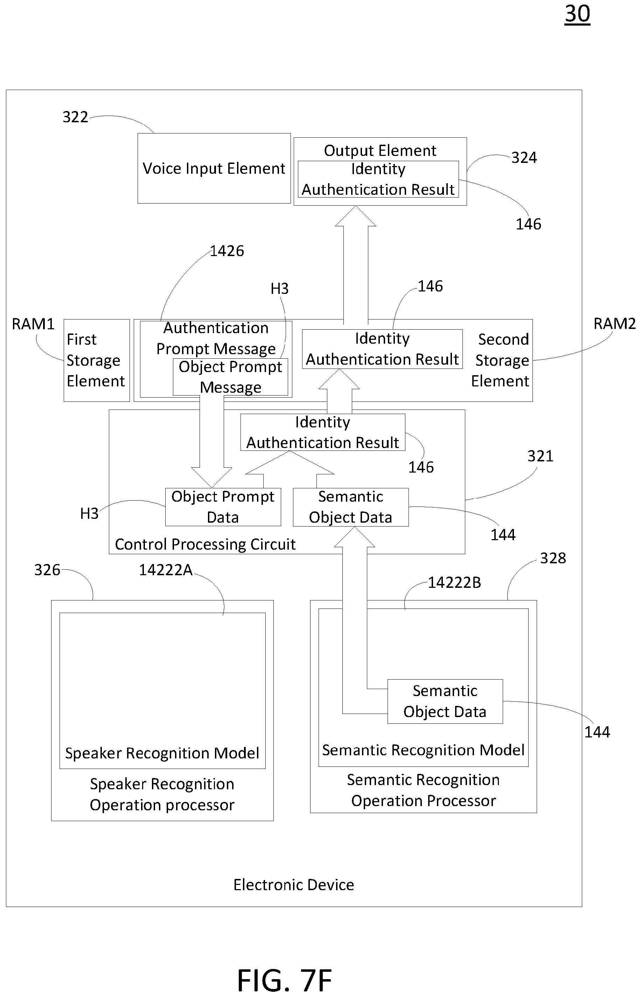

In addition, the identity authentication method of the present application may also be applied to a circuit type operation manner only, as shown in FIGS. 7A to 7F. The identity authentication system 30 includes a control processing circuit 321, a voice input element 322, an output element 324, a speaker recognition operation processor 326, and a semantic recognition operation processor 328, and is equipped with a first storage element RAM1 and a second storage element RAM2. The control processing circuit 321, the first storage element RAM1, and the second storage element RAM2 correspond to the operation processor 142 of the previous embodiment. The operation behaviors of the control processing circuit 321, the speaker recognition operation processor 326, and the semantic recognition operation processor 328 correspond to the operation behaviors of the identity authentication program 1422 of the previous embodiment. The speaker recognition model 14222A and the semantic recognition model 14222B are respectively executed in the speaker recognition operation processor 326 and the semantic recognition operation processor 328. The control processing circuit 321, the speaker recognition operation processor 326, and the semantic recognition operation processor 328 may be respectively implemented by an FPGA circuit, an SOC circuit, or other integrated circuits with logic computing capabilities. The first storage element RAM1 and the second storage element RAM2 are used for data temporary storage. The other operation manners are the same as the operation manners of the above embodiments, and thus are not described more in detailed herein.

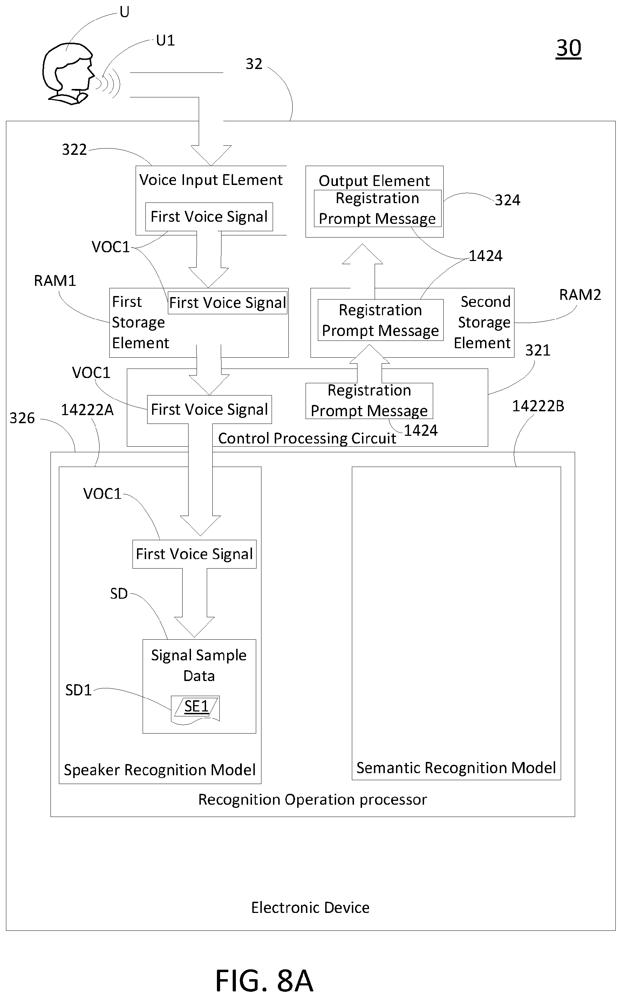

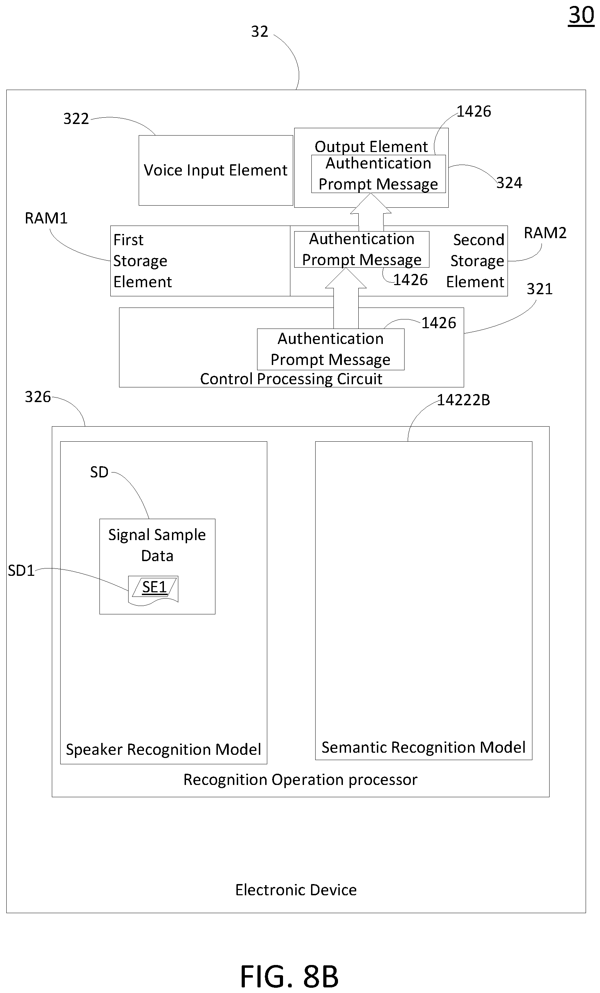

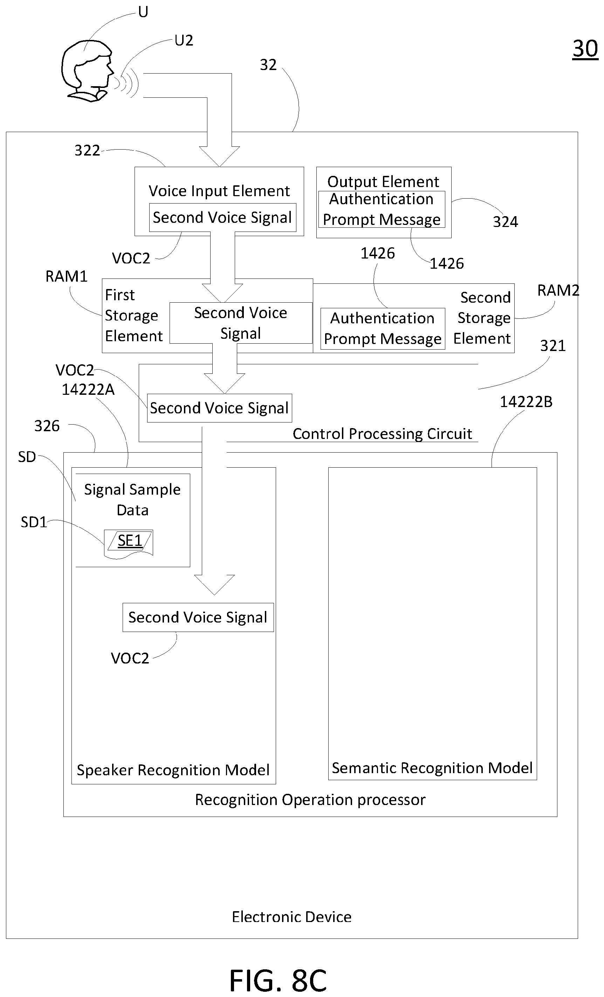

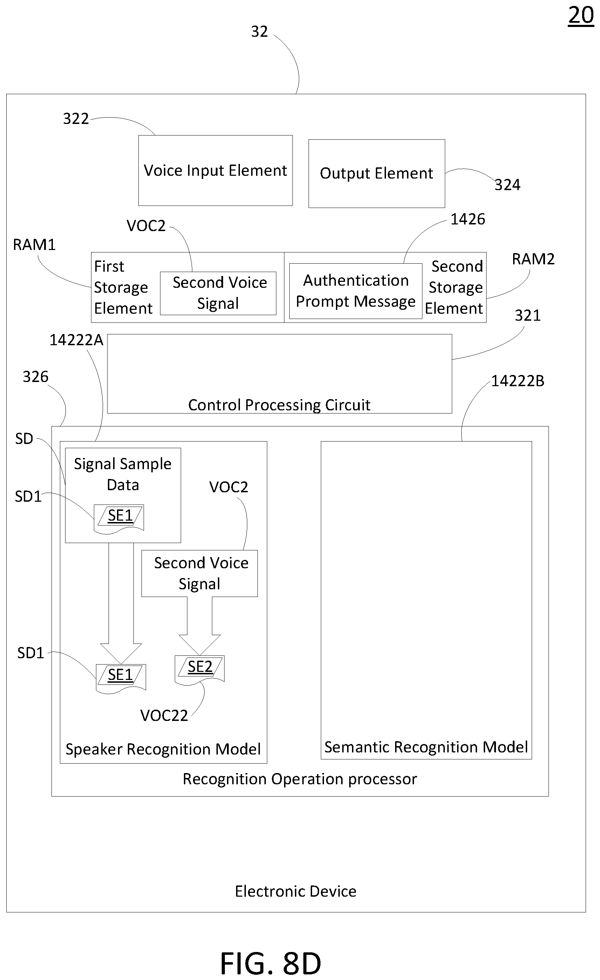

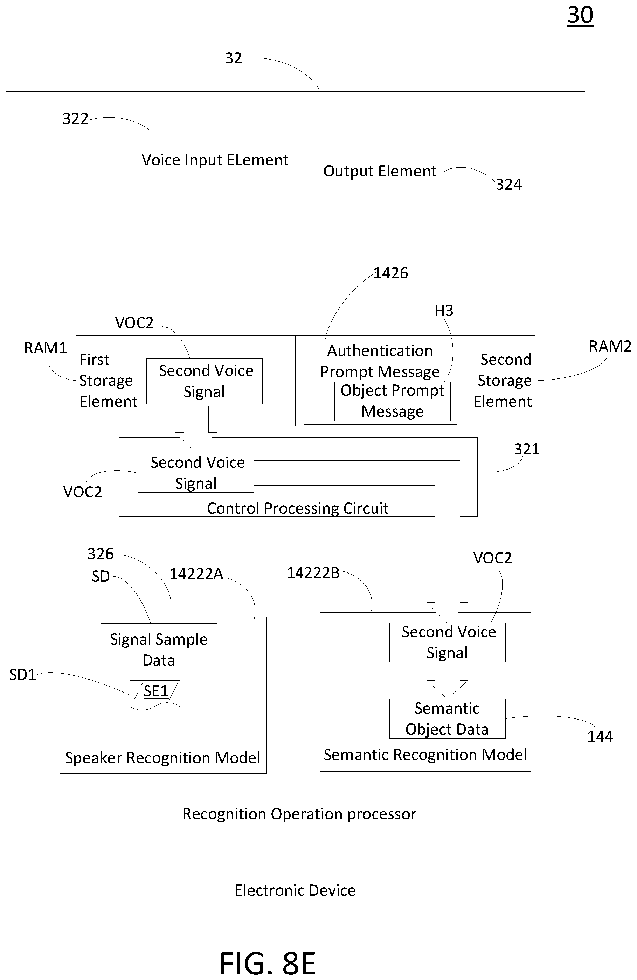

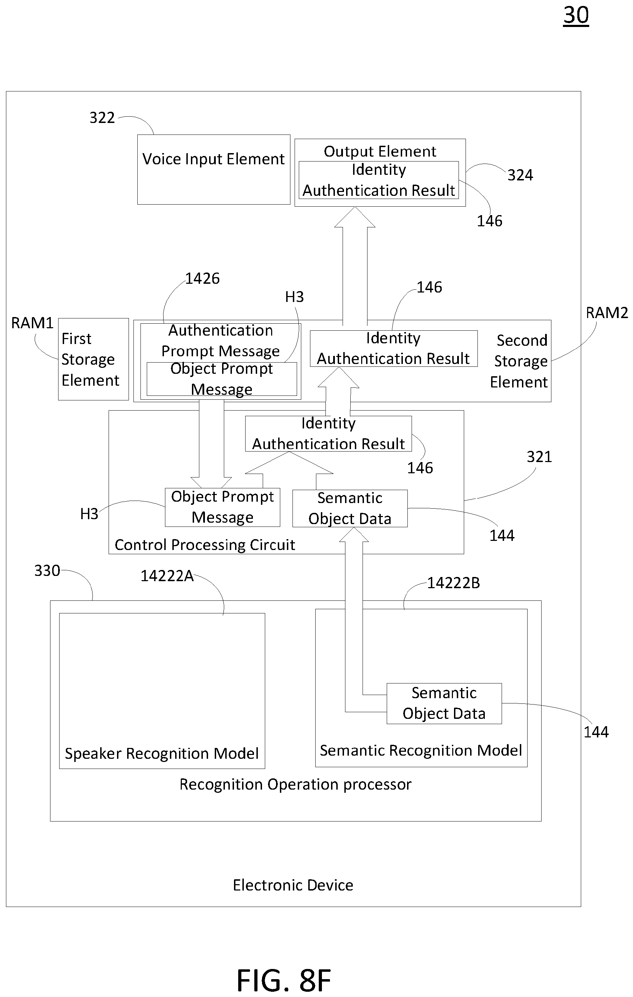

Furthermore, the speaker recognition model 14222A and the semantic recognition model 14222B may be disposed in a same operation processor, as shown in FIGS. 8A-8F. The difference between FIGS. 7A-7F and FIGS. 8A-8F is that the speaker recognition model 14222A and the semantic recognition model 14222B in FIGS. 7A-7F are respectively arranged in the speaker recognition operation processor 326 and the semantic recognition operation processor 328, and the speaker recognition model 14222A and the semantic recognition model 14222B in FIGS. 8A-8F are integrated in the same recognition operation processor 330, that is, the recognition operation processor 330 has the operation functions of the speaker recognition operation processor 326 and the semantic recognition operation processor 328, that is, the operation functions of the speaker recognition operation processor 326 and the semantic recognition operation processor 328 are combined into the recognition operation processor 330. The other operation manners are the same as the operation manners in the above embodiments, and thus are not described more in detailed herein.

In addition, according to the above embodiments, the identity authentication system and method thereof according to the present application have a registration stage for obtaining corresponding signal sampling data by inputting a first voice signal, thereby, registering a voice sample of a user. Then, the identity authentication system and method thereof according to the present application have a verification stage for outputting a verification prompt message randomly, so that the user inputs a corresponding second voice signal according to the verification prompt message, for recognizing whether a speaker is the user of the signal sampling data, and performing semantic recognition after confirming the user of the signal sampling data, thereby obtaining semantic object data, and finally comparing the semantic object data with the verification prompt message to correspondingly generate an identity authentication result, thereby, solving the problems of forgetting a key, a key being cracked, or a one-time password being obtained by binding a specific device.

Therefore, the present application indeed possesses novelty, progressiveness, and industrial applicability, undoubtedly meeting the requirements for a patent application under the national patent law. Accordingly, a patent application has been legally filed, earnestly praying for the patent application grant to be issued soon.

However, the above description is merely an embodiment of the present application and is not intended to limit the scope of the present application. Therefore, all equivalent modifications and variations according to the structure, and the features described in the scope of the patent application should be included within the scope of this patent application.

## Claims

1. An identity authentication method, which is applied to an operation processor inputting a first voice signal to the operation processor through a voice input element, the operation processor executing a speaker recognition model to sample and recognize the first voice signal to correspondingly generate a signal sampling data, the signal sampling data comprising at least one first signal segment, the identity authentication method comprising:
using the operation processor randomly generating an authentication prompt message to an output element to drive the output element to output the authentication prompt message, the authentication prompt message comprising at least one prompt object and an object prompt message, the object prompt message corresponding to the at least one prompt object;
inputting a second voice signal to the operation processor through the voice input element according to the authentication prompt message;
driving the operation processor to execute the speaker recognition model to sample at least one second signal segment from the second voice signal and recognize the at least one second signal segment according to the at least one first signal segment, and execute a semantic recognition model to recognize the second voice signal and generate an intent object data; and
driving the operation processor to compare the object prompt message with the intent object data to generate an identity authentication result.

2. The identity authentication method of Claim 1, wherein in the step of generating a random authentication prompt message to an output element by using the operation processor to drive the output element to output the authentication prompt message, the authentication prompt message comprising at least one prompt object and an object prompt message, the object prompt message corresponding to the at least one prompt object, a host transmits the authentication prompt message generated by the operation processor to an electronic device, the electronic device outputs the authentication prompt message through the output element, the authentication prompt message being an image message or a voice message.

3. The identity authentication method of Claim 2, wherein in the step of inputting a second voice signal to the operation processor through the voice input element according to the authentication prompt message, the electronic device receives the second voice signal through the voice input element according to the authentication prompt message and transmits the second voice signal to the host to input the second voice signal to the operation processor.

4. The identity authentication method of Claim 1, wherein in the step of driving the operation processor to execute the speaker recognition model to sample at least one second signal segment from the second voice signal and recognize the at least one second signal segment according to the at least one first signal segment, and execute an semantic recognition model to recognize the second voice signal and generate an intent object data, the at least one second signal segment corresponds to at least one second speaker feature parameter, the operation processor executes the semantic recognition model to extract features of the second voice signal, and merges a feature extracting result of the second voice signal with the at least one second speaker feature parameter to generate the intent object data.

5. The identity authentication method of Claim 4, wherein the operation processor executes the speaker recognition model to convert the first voice signal into a plurality of word vectors, encode an order of the word vectors, and extract features of the word vectors, thereby obtaining a plurality of first feature vectors and normalization operating the first feature vectors to generate the signal sampling data.

6. The identity authentication method of Claim 1, wherein in the step of driving the operation processor to execute the speaker recognition model to sample at least one second signal segment from the second voice signal and recognize the at least one second signal segment according to the at least one first signal segment, and execute a semantic recognition model to recognize the second voice signal and generate an intent object data, comprising:
using the operation processor sampling the at least one second signal segment from the second voice signal;
using the operation processor comparing the at least one second signal segment with the at least one first signal segment to recognize the second voice signal; and
when the at least one second signal segment matches the at least one first signal segment, the operation processor executing the semantic recognition model to recognize the second voice signal and generate the intent object data.

7. The identity authentication method of Claim 6, wherein in the step of driving the operation processor to execute the speaker recognition model to sample at least one second signal segment from the second voice signal and recognize the at least one second signal segment according to the at least one first signal segment, and execute an semantic recognition model to recognize the second voice signal and generate an intent object data, the operation processor executes the speaker recognition model to convert the second voice signal into a plurality of word vectors, encode an order of the word vectors, and extracts features of the word vectors, thereby, obtaining a plurality of second feature vectors and normalization operating the second feature vectors to generate the at least one second signal segment.

8. The identity authentication method of Claim 1, wherein the speaker recognition model is a WavLM model, a SpeakerNet model or a TitaNet model, and the semantic recognition model is a Transformer model, a Wav2Vec 2.0 model or a LAS model.

9. The identity authentication method of Claim 1, wherein the operation processor comprises a speaker recognition processor executing the speaker recognition model, and a semantic recognition processor executing the semantic recognition model.

10. The identity authentication method of Claim 9, wherein the speaker recognition processor and the semantic recognition processor are further combined into an authentication operation processor to execute the speaker recognition model and the semantic recognition model at the same time.

11. An identity authentication system, comprising:
an operation processor, coupled to a voice input element, randomly generating an authentication prompt message, the operation processor receiving a first voice signal through the voice input element, executing a speaker recognition model to sample and recognize the first voice signal, and generating a signal sampling data, the signal sampling data including at least one first signal segment; and
an output element, coupled to the operation processor, the output element outputting the authentication prompt message during an authentication stage ^{,} 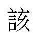 authentication prompt message including at least one prompt object and an object prompt message, the object prompt message corresponding to at least one prompt object;
wherein the operation processor receives a second voice signal through the voice input element, the operation processor executes the speaker recognition model to sample at least one second signal segment from the second voice signal and recognize the at least one second signal segment based on the at least one first signal segment, the operation processor executes a semantic recognition model to recognize the second voice signal and generate an intent object data, the operation processor compares the intent object data with the object prompt message to generate an identity authentication result.

12. The identity authentication system of Claim 11, wherein the operation processor is disposed in a host, the output element is disposed in an electronic device, the host transmitting the generated authentication prompt message to the electronic device, the electronic device outputs authentication prompt message through the output element, the authentication prompt message is an image message or a voice message.

13. The identity authentication system of Claim 12, wherein the voice input element is further disposed on the electronic device, receives the second voice signal based on the authentication prompt message through the voice input element, and transmitting the second voice signal to the host for inputting the second voice signal to the operation processor.

14. The identity authentication system of Claim 11, wherein the operation processor executes the speaker recognition model to convert the first voice signal into a plurality of word vectors, encode an order of the word vectors, and extract features of the word vectors, thereby obtaining a plurality of first feature vectors and normalization operating the first feature vectors to generate the signal sampling data.

15. The identity authentication system of Claim 11, wherein the operation processor compares the at least one second signal segment with the at least one first signal segment for recognizing the second voice signal, when the at least one second signal segment matches the at least one first signal segment, the operation processor executes the semantic recognition model to recognize the second voice signal and generate the intent object data.

16. The identity authentication system of Claim 11, wherein the operation processor executes speaker recognition model to convert the second voice signal into a plurality of word vectors, encode an order of the word vectors, and extract features of the word vectors, thereby, obtaining a plurality of second feature vectors and normalization operating the second feature vectors to generate the at least one second signal segment.

17. The identity authentication system of Claim 11, wherein the operation processor executes the semantic recognition model and extracts features of the second voice signal, generate the intent object data based on a feature extracting result of the second voice signal.

18. The identity authentication system of Claim 11, wherein the speaker recognition model is a Wav LM model, a Speaker Net model or a TitaNet model, and the semantic recognition model is a Transformer model, a Wav2Vec 2.0 model or a LAS model.

19. The identity authentication system of Claim 11, wherein the operation processor comprises a speaker recognition processor executing the speaker recognition model, and an semantic recognition processor executing the semantic recognition model.

20. The identity authentication system of Claim 19, wherein the speaker recognition processor and the semantic recognition processor are further combined into an authentication operation processor to execute the speaker recognition model and the semantic recognition model at the same time.
